(19) Europäisches Patentamt

European Patent Office

Office européen des brevets

(11) **EP 3 970 499 A1**

(12) **DEMANDE DE BREVET EUROPEEN**

(43) Date de publication:
**23.03.2022 Bulletin 2022/12**

(51) Classification Internationale des Brevets (IPC):
***A21C 1/14*** *(2006.01)*

(21) Numéro de dépôt: **21196956.3**

(52) Classification Coopérative des Brevets (CPC):
**A21C 1/1455; A21C 1/145; A21C 1/146**

(22) Date de dépôt: **15.09.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.09.2020 FR 2009383**

(71) Demandeurs:
- **VMI**
  **85600 Montaigu Vendée (FR)**
- **Ecole Nationale Vétérinaire, Agroalimentaire et de**
  **l'Alimentation, Nantes- Atlantique - ONIRIS**
  **44307 Nantes Cedex 3 (FR)**

- **Centre national de la recherche scientifique**
  **75016 Paris (FR)**

(72) Inventeurs:
- **RIBETTE LANCELOT, Eloïse**
  **44240 La Chapelle Sur Erdre (FR)**
- **FONTAINE, JORAN**
  **44300 Nantes (FR)**
- **REBILLARD, ADRIEN**
  **44240 La Chapelle sur Erdre (FR)**
- **LEBAIL, Alain**
  **44300 NANTES (FR)**
- **CHEIO DE OLIVEIRA, José**
  **85600 St Hilaire de Loulay (FR)**

(74) Mandataire: **Germain Maureau**
  **12, rue Boileau**
  **69006 Lyon (FR)**

(54) **PROCÉDÉ DE DÉTERMINATION D'UN ÉTAT DE PÉTRISSAGE D'UN PÂTE, SYSTÈME DE SUIVI DE L' ÉTAT DE PÉTRISSAGE ET MACHINE DE PÉTRISSAGE**

(57) Le présent exposé concerne un procédé de détermination d'un état de pétrissage d'une pâte telle qu'une pâte céréalière, la pâte étant configurée pour être pétrie dans une machine de pétrissage (1), la machine de pétrissage (1) comprenant une pluralité de capteurs (13, 15, 17) configurés pour mesurer des grandeurs représentatives de la pâte au cours d'un cycle de pétrissage et au moins un outil de pétrissage, le procédé comprenant les étapes consistant à :

- collecter les mesures des grandeurs représentatives de la pâte en continu lors du cycle de pétrissage ;
- déterminer un état de pétrissage sur la base d'un modèle d'état de pétrissage défini en fonction des mesures des grandeurs représentatives, le modèle d'état de pétrissage étant défini ou adapté sur la base d'une phase d'apprentissage ;
- vérifier la réalisation d'un critère d'arrêt de pétrissage basé sur l'état de pétrissage.

[Fig. 2]

EP 3 970 499 A1

## Description

Le présent exposé concerne un procédé de détermination d'un état de pétrissage d'une pâte telle qu'une pâte céréalière, ainsi qu'un système de suivi de l'état de pétrissage et une machine de pétrissage de la pâte.

## Technique antérieure

Dans l'industrie agroalimentaire, le suivi des différentes étapes d'un procédé, depuis la préparation d'une pâte jusqu'à sa cuisson, est une préoccupation majeure pour la qualité du produit final. Le pétrissage est souvent considéré comme l'étape la plus importante. En effet, plusieurs modifications physiques, chimiques et physicochimiques se produisent lors du pétrissage, lors duquel les ingrédients sont mélangés de manière homogène pour former une pâte ayant une hydratation suffisante pour assurer un gonflement des particules de farine. Une pâte viscoélastique qui est capable de conserver les noyaux de gaz qui développeront pendant la phase de fermentation est ainsi obtenue. Le temps de pétrissage et la quantité de travail mécanique appliquée à la pâte ont un effet critique sur le développement des propriétés rhéologiques de la pâte. Si la pâte n'est pas assez mélangée ou bien trop mélangée au-delà de son optimum de développement, le produit final sera de mauvaise qualité. Ce temps de pétrissage optimal dépend de la formulation et de la technologie de mélange et est souvent déterminé par l'expérience des opérateurs.

Il est connu d'utiliser des capteurs associés aux machines de pétrissage pour pouvoir suivre l'évolution du pétrissage de la pâte. Toutefois, il est difficile de déterminer en temps réel la durée que doit avoir le cycle de pétrissage. Par exemple, si la durée de pétrissage est déterminée par le pic d'une courbe, il est difficile de déterminer le pic de cette courbe avant de l'avoir passé.

Les systèmes actuels ne permettent donc pas de déterminer avec précision le moment de l'arrêt du pétrissage d'une pâte.

## Exposé de l'invention

Le présent exposé a pour but de résoudre tout ou partie des inconvénients mentionnés ci-dessus

A cet effet, le présent exposé concerne un procédé de détermination d'un état de pétrissage d'une pâte telle qu'une pâte céréalière, la pâte étant configurée pour être pétrie dans une machine de pétrissage, la machine de pétrissage comprenant une pluralité de capteurs configurés pour mesurer des grandeurs représentatives de la pâte au cours d'un cycle de pétrissage et au moins un outil de pétrissage, le procédé comprenant les étapes consistant à :

- collecter les mesures des grandeurs représentatives de la pâte en continu lors du cycle de pétrissage ;

- déterminer un état de pétrissage sur la base d'un modèle d'état de pétrissage défini en fonction des mesures des grandeurs représentatives, le modèle d'état de pétrissage étant défini ou adapté sur la base d'une phase d'apprentissage ;
- vérifier la réalisation d'un critère d'arrêt de pétrissage basé sur l'état de pétrissage.

Ainsi, l'avancement du cycle de pétrissage peut être suivi en temps réel et l'arrêt du pétrissage peut être programmé avec précision, à partir du croisement de plusieurs mesures de grandeurs représentatives de la pâte réalisées en continu pendant le cycle de pétrissage. Par ailleurs, ce procédé peut être réalisé sur différents types de machine de pétrissage. Le procédé mis en œuvre nécessite peu d'entretien et permet de limiter les coûts.

Par exemple, l'état de pétrissage est une grandeur qui correspond à une combinaison linéaire de paramètres de pétrissage. Par exemple, l'état de pétrissage peut être exprimé sous forme de pourcentage d'avancement.

Par exemple, une pâte est formée par une pluralité d'ingrédients mélangés. La quantité de chaque ingrédient de la pluralité l'ingrédients formant la pâte est définie par une recette.

Par exemple, le cycle de pétrissage est configuré pour débuter par le mélange de la pluralité d'ingrédients versés dans la machine de pétrissage.

Dans certains modes de réalisation, le procédé de détermination comprend une étape consistant à arrêter le cycle de pétrissage de la pâte si le critère d'arrêt de pétrissage est réalisé.

Ainsi, en plus des avantages précédemment cités, le procédé de détermination selon le présent exposé permet un arrêt de la machine à pétrir lorsque le critère d'arrêt est réalisé. Cela améliore encore la précision du moment de l'arrêt du pétrissage de la pâte.

Par exemple, l'étape consistant à arrêter le cycle de pétrissage de la pâte est réalisée automatiquement lorsque le critère d'arrêt de pétrissage est réalisé.

Dans certains modes de réalisation, la phase d'apprentissage comprend au moins un cycle de test, elle peut notamment comprendre au moins trois cycles de test, chaque cycle de test comprenant les étapes suivantes :

- collecter les mesures des grandeurs représentatives en continu lors d'un cycle de pétrissage ;
- définir le modèle d'état de pétrissage ;
- définir le critère d'arrêt de pétrissage.

Ainsi, grâce à ces dispositions, en plus des avantages précédemment cités, le modèle d'état de pétrissage et le critère d'arrêt de pétrissage peuvent être définis avant de commencer des cycles de pétrissage destinés à former des produits finaux.

La phase d'apprentissage peut comprendre plusieurs cycles de test, par exemple trois cycles de test.

Dans certains modes de réalisation, la phase d'apprentissage comprend une étape consistant à définir des gammes de valeurs des grandeurs représentatives correspondant au critère d'arrêt de pétrissage.

Ainsi, en plus des avantages précédemment cités, le critère d'arrêt de pétrissage peut être défini avec précision.

Dans certains modes de réalisation, la phase d'apprentissage comprend une étape de contrôle de la pâte permettant définir ou d'adapter le critère d'arrêt de pétrissage.

Grâce à cette étape de contrôle, en plus des avantages cités précédemment, le critère d'arrêt est défini avec précision. En outre, l'utilisateur peut définir ou adapter le critère d'arrêt de pétrissage en fonction de ses préférences et de son expérience.

Par exemple, l'étape de contrôle de la pâte est réalisée après l'arrêt du pétrissage.

Par exemple, l'étape de contrôle est réalisée par un utilisateur. Par exemple, l'étape de contrôle comprend un contrôle visuel de la pâte, en particulier un contrôle d'un aspect d'une surface de la pâte. Par exemple, l'étape de contrôle comprend un contrôle de la pâte au toucher et/ou un contrôle de la pâte à l'étirement.

Dans certains modes de réalisation, la phase d'apprentissage comprend une analyse statistique des grandeurs représentatives mesurées.

Dans certains modes de réalisation, la phase d'apprentissage comprend une analyse discriminante des grandeurs représentatives mesurées.

Dans certains modes de réalisation, la phase d'apprentissage comprend une analyse en composantes principales des grandeurs représentatives mesurées.

Dans certains modes de réalisation, les grandeurs représentatives sont :

- l'échauffement de la pâte ;

- la puissance de la machine de pétrissage qui est exploitée pour calculer une énergie spécifique mécanique ;

- Le nombre total de rotations de l'outil de pétrissage ;

- l'absorbance de la pâte sur des longueurs d'onde comprises dans une gamme de longueurs d'onde, notamment dans une gamme de longueur d'ondes infrarouges.

Ainsi, en plus des avantages précédemment cités, l'analyse conjointe de ces grandeurs représentatives fournit de nombreux indicateurs qui permettent de caractériser précisément l'état de pétrissage de la pâte.

Le présent exposé concerne en outre un système de suivi de l'état de pétrissage pour une machine de pétrissage d'une pâte configuré pour la mise en œuvre du procédé selon l'une des caractéristiques susmentionnées, comprenant :

- une pluralité de capteurs configurée pour mesurer des grandeurs représentatives de la pâte au cours d'un cycle de pétrissage ;

- une unité de contrôle électronique.

Le système de suivi de l'état de pétrissage permet de détermination de l'état de pétrissage de la pâte directement en ligne et d'automatiser l'arrêt du mélange. Par ailleurs, ce système de suivi de l'état de pétrissage peut être adapté sur différents types de machine de pétrissage, nécessite peu d'entretien et est peu coûteux.

Le système de suivi de l'état de pétrissage peut être intégré dans la machine de pétrissage.

Le système de suivi de l'état de pétrissage peut également être adapté sur des machine de pétrissage existante.

L'unité de contrôle électronique est configurée pour déterminer un état de pétrissage sur la base d'un modèle d'état de pétrissage défini en fonction des mesures des grandeurs représentatives, le modèle d'état de pétrissage étant défini ou adapté sur la base d'une phase d'apprentissage.

L'unité de contrôle électronique est configurée pour vérifier la réalisation d'un critère d'arrêt de pétrissage basé sur l'état de pétrissage.

L'unité de contrôle électronique peut également être configurée pour arrêter automatiquement la machine de pétrissage lorsque le critère d'arrêt de pétrissage est réalisé.

Dans certains modes de réalisation, la pluralité de capteurs comprend un capteur proche infrarouge.

La grandeur représentative de la pâte est mesurée de façon directe et rapide et le coût de ce capteur est limité. Le capteur proche infra-rouge permet de mesurer les modifications chimiques de la pâte lors du cycle de pétrissage.

Par exemple, la pluralité de capteurs comprend un capteur de température.

Par exemple, la pluralité de capteurs comprend un capteur de puissance de la machine de pétrissage, un capteur de vitesse et un capteur du nombre total de rotation de l'outil de pétrissage.

Le présent exposé concerne en outre une machine de pétrissage comprenant un système de suivi pétrissage conforme aux caractéristiques susmentionnées.

L'invention et ses avantages seront mieux compris à la lecture de la description détaillée faite ci-après de différents modes de réalisation de l'invention donnés à titre d'exemples non limitatifs. Cette description fait référence aux pages de figures annexées.

**Brève Description des dessins**

[Fig. 1] La figure 1 représente une machine de pétrissage, par exemple un pétrin.

[Fig. 2] La figure 2 représente un système de suivi de l'état de pétrissage.

[Fig. 3] La figure 3 représente un exemple d'affichage de l'état de pétrissage.

[Fig. 4] La figure 4 représente le procédé de détermination d'un état de pétrissage d'une pâte.

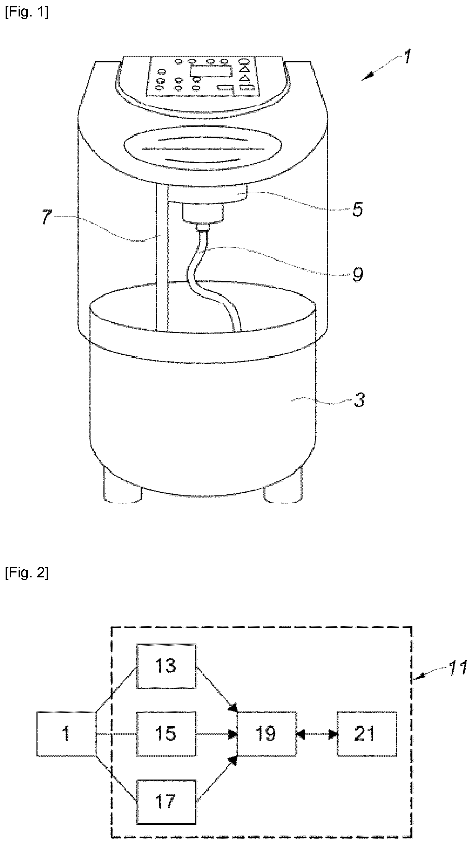

La figure 1 représente une machine de pétrissage 1, adaptée pour la mise en œuvre d'un procédé de pétrissage décrit dans le présent exposé.

Le pétrissage d'une pâte est réalisé dans la machine de pétrissage 1 lors d'un cycle de pétrissage. La pâte peut par exemple être une pâte céréalière. Suite au cycle de pétrissage, la pâte est généralement mise en forme et/ou cuite de façon à obtenir un produit final, par exemple un pain, une viennoiserie ou une pâtisserie.

La pâte est caractérisée par une recette et un état de pétrissage. L'état de pétrissage résulte notamment des paramètres de la machine de pétrissage 1, par exemple de la puissance ou bien de l'énergie fournie pendant le cycle de pétrissage, et du temps de pétrissage. La recette est généralement propre à chaque utilisateur. De même, l'état de pétrissage souhaité final de la pâte est généralement propre à chaque utilisateur de la machine. En effet, chaque utilisateur utilise généralement sa propre recette et souhaite obtenir un état de pétrissage particulier à la fin du cycle de pétrissage de sorte que l'origine du produit final obtenu soit identifiable. Ainsi, pour une même recette, un utilisateur peut préférer un certain état de pétrissage, alors qu'un autre utilisateur en préférera un autre.

La machine de pétrissage comprend une cuve 3, dans laquelle sont insérés les ingrédients de la pâte, selon une recette prédéterminée. La machine de pétrissage 1 comprend également un bras 5 sur lequel peuvent être montés des outils de pétrissage 7, 9. Les outils de pétrissage 7, 9 sont configurés pour être disposés au moins en partie à l'intérieur de la cuve 3 de sorte à être au contact des ingrédients de la pâte, puis de la pâte en cours de pétrissage. Ici, deux outils 7, 9 sont montés sur le bras 5 de pétrissage. Un premier outil 7, possiblement dénommé pivot, a une forme allongée et sensiblement linéaire. Un deuxième outil 9 a une forme de spirale.

Un système de suivi de l'état de pétrissage 11 est représenté en figure 2. Le système de suivi de l'état de pétrissage 11 comprend une pluralité de capteurs 13, 15, 17 permettant d'obtenir des mesures de grandeurs représentatives de la pâte. Ici, le système de suivi de l'état de pétrissage 11 comprend un capteur de température 13, un capteur de puissance 15 et une sonde proche infra-rouge 17 (SPIR).

Le capteur de température 13 est configuré pour mesurer la température de la pâte au cours du cycle de pétrissage. Le capteur de température 13 peut donc être disposé dans la cuve 3, de sorte à être au contact de la pâte en cours de pétrissage et réaliser des mesures par contact, ou thermocouple. Selon une variante, le capteur de température 13 peut également être disposé à distance de la pâte et réaliser des mesures à distance, par exemple par sonde infra rouge.

Le capteur de puissance 15 est disposé au niveau du bras 5 de la machine de pétrissage 1 et permet mesurer la puissance de la machine. Par exemple, le capteur de puissance 15 est configuré pour mesurer le nombre de tours outil et l'énergie fournie par l'outil de pétrissage 7,9.

La SPIR 17 peut être disposée au bout de l'un des premier et deuxième outils 7, 9, ici le premier outil 7. Ici, la SPIR 17 est configurée pour être au contact de la pâte. Toutefois, la SPIR 17 peut aussi être disposée à distance de la pâte et réaliser des mesures à distance. La SPIR 17 est configurée pour mesurer les propriétés de la pâte au cours du pétrissage, comme la teneur en eau, la teneur en amidon et la qualité de la farine exprimée par exemple par la teneur en protéines et par l'absorbance de la pâte sur certaines longueurs d'onde comprises dans la gamme de longueurs d'onde infrarouges. En effet, ces propriétés de la pâte dépendent de la recette utilisée, mais également de chaque cycle de pétrissage, en fonction de la manière dont les ingrédients se mélangent et des conditions de l'environnement extérieur, comme l'humidité ou la température de la pièce dans laquelle est disposée la machine de pétrissage 1. Ces mesures peuvent donc varier d'un cycle de pétrissage à l'autre, pour une même recette et une même puissance de la machine de pétrissage 1.

Le système de suivi de pétrissage comprend également une unité de contrôle électronique 19 (ECU). L'ECU 19 est relié à la pluralité de capteurs 13, 15, 19 et est configuré pour collecter les mesures de grandeurs représentatives réalisées par les différents capteurs de la pluralité de capteurs 13, 15, 17. L'ECU 19 comprend une mémoire configurée pour conserver les mesures de grandeurs représentatives pour chaque cycle de pétrissage réalisé par la machine de pétrissage 1. L'ECU 19 comprend également un logiciel configuré pour traiter, au cours d'un cycle de pétrissage, les mesures de grandeurs représentatives collectées par la pluralité de capteurs 13, 15, 17. Le logiciel est également configuré pour analyser l'ensemble des données conservées dans la mémoire.

Par exemple, l'exploitation par l'ECU 19 des grandeurs représentatives mesurées par le capteur de puissance 15 est réalisé en calculant l'énergie mécanique spécifique mais également en analysant la dérivée temporelle de la courbe des valeurs de la puissance mécanique en fonction du temps de pétrissage.

Par exemple, l'ECU 19 est configuré pour exploiter les mesures de grandeurs représentatives du capteur de température 13 en calculant l'échauffement de la pâte. Pour cela, l'ECU 19 est configuré pour comparer la mesure de température initiale de la pâte en fin de frasage avec les mesures de température collectées au cours du cycle de pétrissage.

Par exemple, l'ECU 19 est configuré pour exploiter les mesures de grandeurs représentatives de la SPIR 17. En particulier, dans ce mode de réalisation, l'ECU 19 est configuré pour exploiter les mesures réalisées sur des gammes de longueur d'ondes prédéterminées. Par exemple, les longueurs d'onde dans lesquelles des mesures de teneur en eau dans la pâte sont réalisées sont comprises entre à 1460 et 1930 nm environ. Par exemple, la longueur d'onde dans laquelle des mesures de teneur en protéines de la farine dans la pâte sont réalisées est comprises entre 1460 et 1570 nm, et/ou 1980 nm, et/ou entre 2050 et 2060 nm et/ou 2180 nm.

Le système de suivi de l'état de pétrissage 11 comprend une interface utilisateur 21 permettant d'afficher les données traitées par l'ECU 19. L'affichage des données traitées permettent à l'utilisateur de connaître l'état de pétrissage de la pâte, et l'avancement du cycle de pétrissage.

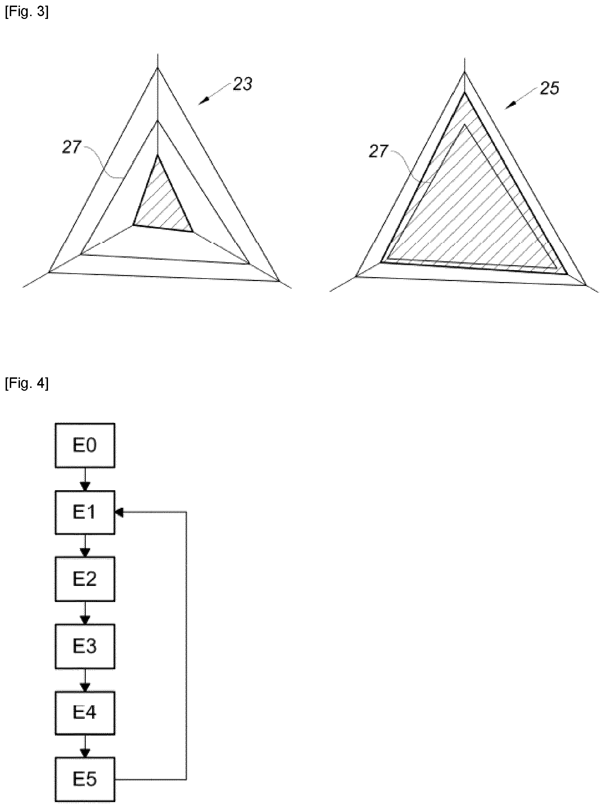

Par exemple, l'état de pétrissage est une grandeur qui correspond à une combinaison linéaire de paramètre de pétrissage. L'état de pétrissage peut être exprimé de différentes façons. Par exemple, l'état de pétrissage peut être affiché sous forme d'une courbe ou d'un pourcentage d'avancement. L'état de pétrissage peut également être affiché sous la forme d'un diagramme 23, 25, comme représenté en figure 3, comprenant une pluralité d'axes correspondant chacun à une grandeur représentative mesurée par l'un des capteurs de la pluralité de capteur, la pluralité d'axes ayant la même origine. Ici, le diagramme comprend 3 axes correspondant à l'échauffement, l'énergie transmise par la machine de pétrissage et le nombre total de rotation de l'outil de pétrissage. L'état de pétrissage est ici représenté sous la forme d'une surface triangulaire définie par l'avancement du pétrissage selon chaque axe de la pâte. Dans l'exemple représenté en figure 3, le premier diagramme 23 correspond à un état de pétrissage de 45% et le deuxième diagramme 25 correspond à un état de pétrissage de 102%. Les diagrammes peuvent également permettre d'afficher des valeurs seuil. Par exemple, sur les diagrammes 23, 25, un triangle 27 correspondant à un état de pétrissage de 100% est affiché.

L'interface utilisateur 21 est également configurée pour d'afficher des alertes en cas de détection d'anomalie dans la recette par le logiciel de l'ECU 19.

L'interface utilisateur 21 est également configurée pour transmettre des données entrées par l'utilisateur à l'ECU 19.

La figure 4 représente un procédé de détermination d'un état de pétrissage mis en œuvre par le système de suivi de pétrissage 11.

Le procédé de détermination d'un état de pétrissage comprend une étape E1 consistant à collecter les mesures des grandeurs représentatives en continu par la pluralité de capteurs 13, 15, 17 lors d'un cycle de pétrissage.

Le procédé de détermination d'un état de pétrissage comprend une étape E2 consistant à déterminer un état de pétrissage sur la base de ces mesures de grandeurs représentatives collectées.

La détermination de l'état de pétrissage est réalisée par l'ECU 19, sur la base d'un modèle d'état de pétrissage défini ou adapté en fonction des mesures des grandeurs représentatives.

L'ECU 19 est configuré pour définir le modèle d'état de pétrissage par l'analyse conjointe des mesures des grandeurs représentatives de la pluralité de capteurs 13, 15, 17. Pour cela, des méthodes de calculs basées sur les mesures de la SPIR 17, l'évolution du nombre de tours de l'outil 9, l'énergie apportée à la pâte ainsi que l'échauffement de cette pâte sont intégrées dans le logiciel de l'ECU 19.

Par exemple, le modèle d'état de pétrissage correspond à une addition des grandeurs représentative mesurées par chacun des capteurs de la pluralité de capteurs, multipliées par un coefficient déterminé. Par exemple, le modèle d'état de pétrissage comprend une formule du type :

$$[Math\ 1]\ E = aA + bB + cC$$

où E correspond à l'état de pétrissage, A, B et C sont des valeurs de grandeurs représentatives de la pâte mesurées et a, b et c sont des coefficients appliqués à chacune de ces valeurs. Par exemple, A correspond à l'échauffement de la pâte, B correspond à l'énergie transmise à la pâte par la machine de pétrissage et C représente le nombre total de rotation de l'outil.

Par exemple, dans le cas où l'état de pétrissage est exprimé en pourcentage, le modèle de pétrissage est configuré pour comprendre une formule permettant de déterminer un état de pétrissage nominal E0, qui peut être définie comme :

$$[Math\ 2]\ E0 = aA0 + bB0 + cC0$$

où A0, B0 et C0 sont des valeurs nominales des grandeurs représentatives de la pâte.

Le pourcentage % correspond alors à la formule suivante :

$$[Math\ 3]\ \% = E/E0$$

L'ECU 19 peut être configurée pour analyser les mesures des grandeurs représentatives par une analyse statistique des grandeurs représentatives mesurées lors du cycle de pétrissage et/ou dans le cadre de la phase d'apprentissage.

Dans un premier mode de réalisation, l'analyse statistique est réalisée par une analyse discriminante des grandeurs représentatives mesurées.

Dans un deuxième mode de réalisation, l'analyse statistique est réalisée par une analyse en composantes principales des grandeurs représentatives mesurées.

Dans un troisième mode de réalisation, le logiciel de l'ECU 19 peut par exemple associer une analyse en composantes principales et une analyse discriminante des grandeurs représentatives mesurées afin de générer le modèle d'état de pétrissage.

Par exemple, le modèle d'état de pétrissage permet d'identifier trois étapes du cycle de pétrissage : le frasage (pré-mélange), le pétrissage (mélange rapide) et le sur-pétrissage. L'état de sur-pétrissage est postérieur au pic de puissance maximale consommée lors du cycle de pétrissage. Par exemple, le pic de puissance correspond à un pourcentage de 100%, lorsque l'état de pétrissage est exprimé en pourcentage.

Le modèle d'état de pétrissage d'une pâte peut être différent pour chaque recette, pour un même type de produit final. Le modèle d'état de pétrissage peut également, pour un même utilisateur évoluer au cours du temps, en fonction des préférences de cet utilisateur, cherchant par exemple à améliorer son produit final. L'utilisateur peut entrer des données pouvant modifier le critère d'arrêt de pétrissage.

Le modèle d'état de pétrissage peut donc être défini ou adapté sur la base d'une phase d'apprentissage. Le logiciel est donc configuré pour générer un modèle d'état de pétrissage et ensuite pour adapter ce modèle d'état de pétrissage en fonction des préférences de l'utilisateur.

Afin de définir un nouveau modèle d'état de pétrissage, le procédé peut comprendre une étape E0, antérieure à l'étape E1, dans laquelle un cycle de test est réalisé. L'étape E0 peut être réalisée une ou plusieurs fois, par exemple trois fois.

Le cycle de test, comprend les étapes consistant à démarrer un cycle de pétrissage d'une pâte et collecter les mesures des grandeurs représentatives en continu. Le cycle de test comprend ensuite l'étape d'analyser ces mesures et éventuellement des données entrées par l'utilisateur via l'interface utilisateur 21.

Le cycle de test peut par exemple permettre de définir les coefficients a, b et c.

Ainsi, sur la base de ce modèle de pétrissage, l'étape E2 peut être réalisée.

Ce cycle de test permet également de définir un critère d'arrêt de pétrissage.

Le logiciel est configuré pour établir des gammes de valeurs seuil des grandeurs représentatives correspondant au critère d'arrêt de pétrissage. Par exemple, le critère d'arrêt de pétrissage peut correspondre au pic de puissance de la machine de pétrissage 1 consommée lors du cycle de pétrissage.

Toutefois, comme indiqué ci-dessus, le critère d'arrêt de pétrissage dépend des préférences et de l'expérience de l'utilisateur. Ce critère d'arrêt de pétrissage peut ainsi également être défini grâce aux données entrées par l'utilisateur via l'interface utilisateur 21. Par exemple, si l'état de pétrissage est exprimé sous forme d'un pourcentage, la valeur de 100% peut correspondre au pic de puissance de la machine de pétrissage 1, et le critère d'arrêt de pétrissage peut être défini par l'utilisateur comme correspondant à une valeur de l'état de pétrissage, par exemple de 80%, ou bien de 105%. Ce critère d'arrêt de pétrissage correspond à l'état de pétrissage jugé optimal par l'utilisateur pour obtenir d'un produit fini acceptable pour lui.

Par exemple, le critère d'arrêt de pétrissage peut être défini par une valeur, par exemple selon une formule du type :

$$[\text{Math 4}]\ CA = x$$

où CA correspond au critère d'arrêt de pétrissage et x est une valeur numérique correspondant à un état de pétrissage exprimé en pourcentage.

Par exemple, le critère d'arrêt de pétrissage peut être défini par une gamme de valeurs, par exemple selon une formule du type :

$$[\text{Math 5}]\ y < CA < z$$

où y et z correspondent à des valeurs seuil correspondant à un état de pétrissage exprimé en pourcentage.

Le procédé de détermination d'un état de pétrissage comprend une étape E3 consistant à vérifier la réalisation du critère d'arrêt de pétrissage.

Le procédé de détermination d'un état de pétrissage comprend une étape E4 consistant à arrêter le cycle de pétrissage si le critère d'arrêt de pétrissage est réalisé. Dans cette étape, l'arrêt de la machine de pétrissage peut être automatique ou manuel.

Les cycles de pétrissage postérieurs au cycle de test, c'est-à-dire correspondant aux étapes E1 à E4, peuvent également faire partie de la phase d'apprentissage. En effet, l'ECU 19 est configuré pour analyser les mesures de grandeurs représentatives collectées au cours de ces cycles de pétrissage dans le cadre de la phase d'apprentissage. Le modèle d'état de pétrissage et le critère d'arrêt de pétrissage peuvent donc être adaptés lors de chaque cycle de pétrissage.

Le procédé peut également comprendre une étape E5, postérieure à l'étape E4, consistant à contrôler l'état de pétrissage de la pâte après l'arrêt de la machine de pétrissage. Par exemple, ce contrôle est un contrôle visuel réalisé par l'utilisateur. Par exemple, lors de l'étape E5, au moins une donnée d'évaluation est fournie à l'ECU 19. L'ECU 19 est configuré pour adapter le modèle d'état de pétrissage et le critère d'arrêt de pétrissage en fonction de cette donnée d'évaluation. Une donnée d'évaluation peut correspondre à une évaluation de la qualité de la pâte. Par exemple, la donnée d'évaluation fournie à l'ECU peut être « sous-pétrie », « sous-pétrie utilisable » « pétrie », « sur-pétrie utilisable » ou « sur-pétrie ». Par exemple, une autre donnée d'évaluation peut correspondre à une description de l'aspect de la pâte en surface et à une évaluation de la pâte au toucher, notamment pour en déterminer l'élasticité, la raideur, ou alors la viscosité par exemple.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

**Revendications**

1. Procédé de détermination d'un état de pétrissage d'une pâte telle qu'une pâte céréalière, la pâte étant configurée pour être pétrie dans une machine de pétrissage (1), la machine de pétrissage (1) comprenant une pluralité de capteurs (13, 15, 17) configurés pour mesurer des grandeurs représentatives de la pâte au cours d'un cycle de pétrissage et au moins un outil de pétrissage (7,9), le procédé comprenant les étapes consistant à :

   • collecter les mesures des grandeurs représentatives de la pâte en continu lors du cycle de pétrissage ;
   • déterminer un état de pétrissage sur la base d'un modèle d'état de pétrissage défini en fonction des mesures des grandeurs représentatives, le modèle d'état de pétrissage étant défini ou adapté sur la base d'une phase d'apprentissage ;
   • vérifier la réalisation d'un critère d'arrêt de pétrissage basé sur l'état de pétrissage.

2. Procédé de détermination selon la revendication 1, comprenant une étape consistant à arrêter le cycle de pétrissage de la pâte si le critère d'arrêt de pétrissage est réalisé.

3. Procédé de détermination selon l'une des revendications 1 ou 2, dans lequel la phase d'apprentissage comprend au moins un cycle de test comprenant les étapes consistant à :

   a. collecter les mesures des grandeurs représentatives en continu lors d'un cycle de pétrissage ;
   b. définir le modèle d'état de pétrissage ;
   c. définir le critère d'arrêt de pétrissage.

4. Procédé de détermination selon l'une des revendications précédentes, dans lequel la phase d'apprentissage comprend une étape consistant à définir des gammes de valeurs des grandeurs représentatives correspondant au critère d'arrêt de pétrissage.

5. Procédé de détermination selon la revendication 2, dans lequel la phase d'apprentissage comprend une étape de contrôle de la pâte permettant définir ou d'adapter le critère d'arrêt de pétrissage.

6. Procédé de détermination selon l'une des revendications précédentes, dans lequel la phase d'apprentissage comprend une analyse statistique des grandeurs représentatives mesurées.

7. Procédé de détermination selon la revendication 6, dans lequel la phase d'apprentissage comprend une analyse discriminante des grandeurs représentatives mesurées.

8. Procédé de détermination selon la revendication 6, dans lequel la phase d'apprentissage comprend une analyse en composantes principales des grandeurs représentatives mesurées.

9. Procédé de détermination selon l'une des revendications précédentes, dans lequel les grandeurs représentatives sont choisies parmi :

   • l'échauffement de la pâte ;
   • la puissance de la machine de pétrissage qui est exploitée pour calculer une énergie spécifique mécanique ;
   • Le nombre total de rotation de l'outil de pétrissage ;
   • l'absorbance de la pâte sur des longueurs d'onde comprises dans une gamme de longueurs d'onde infrarouges.

10. Système de suivi de l'état de pétrissage (11) pour une machine de pétrissage (1) d'une pâte configuré pour la mise en œuvre du procédé selon l'une des revendications 1 à 9, comprenant :

    • une pluralité de capteurs (13, 15, 17) configurée pour mesurer des grandeurs représentatives de la pâte au cours d'un cycle de pétrissage ;
    • une unité de contrôle électronique (19).

**11.** Système de suivi de l'état de pétrissage selon la revendication 10, dans lequel la pluralité de capteurs comprend un capteur proche infra-rouge.

**12.** Machine de pétrissage (1) d'une pâte comprenant un système de suivi de l'état de pétrissage (11) selon l'une des revendications 10 ou 11.

[Fig. 1]

[Fig. 2]

[Fig. 3]

[Fig. 4]

RAPPORT DE RECHERCHE EUROPEENNE

Numéro de la demande

EP 21 19 6956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WIDE PETER: "The human decision making in the dough mixing process estimated in an artificial sensor system", JOURNAL OF FOOD ENGINEERING, vol. 39, no. 1, 1 janvier 1999 (1999-01-01), pages 39-46, XP055807419, GB ISSN: 0260-8774, DOI: 10.1016/S0260-8774(98)00141-1 | 1-10,12 | INV. A21C1/14 |
| A | * le document en entier * | 11 | |
| X | WO 2015/097562 A2 (ZIMPLISTIC PTE LTD [SG]) 2 juillet 2015 (2015-07-02) | 1-10,12 | |
| A | * alinéa [0002] * * alinéa [0007] * * alinéa [0009] – alinéa [0010] * * alinéa [0021] – alinéa [0022] * * alinéa [0028] – alinéa [0029] * * revendications 8,11,12,15 * * figures * | 11 | |
| | | | DOMAINES TECHNIQUES RECHERCHES (IPC) |
| X | WO 2016/165946 A1 (KONINKLIJKE PHILIPS NV [NL]) 20 octobre 2016 (2016-10-20) * page 2, ligne 7 – page 3, ligne 12 * * page 3, ligne 21 – page 4, ligne 6 * * page 4, ligne 13 – ligne 15 * * page 5, ligne 30 – page 7, ligne 5 * * page 7, ligne 18 – page 8, ligne 5 * * page 10, ligne 21 – page 13, ligne 4 * * page 13, ligne 21 – page 14, ligne 28 * * page 18, ligne 13 – page 19, ligne 16 * * figures * | 1-12 | A21C |

-/--

Le présent rapport a été établi pour toutes les revendications

| Lieu de la recherche | Date d'achèvement de la recherche | Examinateur |
|---|---|---|
| La Haye | 1 février 2022 | Real Cabrera, Rafael |

page 1 de 2

Europäisches
Patentamt

European
Patent Office

Office européen
des brevets

# RAPPORT DE RECHERCHE EUROPEENNE

Numéro de la demande

**EP 21 19 6956**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/301990 A1 (KAUFFMAN CHARLES [US] ET AL) 3 octobre 2019 (2019-10-03) <br> * alinéa [0002] * <br> * alinéa [0011] – alinéa [0020] * <br> * alinéa [0056] – alinéa [0065] * <br> * alinéa [0072] * <br> * alinéa [0088] – alinéa [0110] * <br> * figures * <br> ————— | 1-12 | |
| X | WO 03/103399 A1 (CEREALIA R & D AB [SE]; KALAYKOV IVAN GUENTCHEV [SE]) 18 décembre 2003 (2003-12-18) <br> * page 1, ligne 4 – page 2, ligne 3 * <br> * page 9, ligne 23 – page 10, ligne 12 * <br> * page 10, ligne 18 – page 11, ligne 19 * <br> * page 12, ligne 3 – ligne 14 * <br> * page 15, ligne 8 – page 17, ligne 8 * <br> * page 17, ligne 17 – page 20, ligne 13 * <br> * figures * <br> ————— | 1-12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 1 février 2022 | Real Cabrera, Rafael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 21 19 6956

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-02-2022

| Document brevet cité au rapport de recherche | | Date de publication | Membre(s) de la famille de brevet(s) | | Date de publication |
|---|---|---|---|---|---|
| WO 2015097562 | A2 | 02-07-2015 | CA | 2930176 A1 | 02-07-2015 |
| | | | EP | 3086649 A2 | 02-11-2016 |
| | | | SG | 2013096110 A | 30-07-2015 |
| | | | US | 2015181897 A1 | 02-07-2015 |
| | | | US | 2016213009 A1 | 28-07-2016 |
| | | | WO | 2015097562 A2 | 02-07-2015 |
| WO 2016165946 | A1 | 20-10-2016 | BR | 112017021997 A2 | 10-07-2018 |
| | | | CN | 107529922 A | 02-01-2018 |
| | | | EP | 3282904 A1 | 21-02-2018 |
| | | | JP | 2018512195 A | 17-05-2018 |
| | | | RU | 2673854 C1 | 30-11-2018 |
| | | | US | 2018139970 A1 | 24-05-2018 |
| | | | WO | 2016165946 A1 | 20-10-2016 |
| US 2019301990 | A1 | 03-10-2019 | AU | 2019245251 A1 | 26-11-2020 |
| | | | CA | 3095604 A1 | 03-10-2019 |
| | | | CN | 112105911 A | 18-12-2020 |
| | | | EP | 3775836 A1 | 17-02-2021 |
| | | | US | 2019301990 A1 | 03-10-2019 |
| | | | WO | 2019191560 A1 | 03-10-2019 |
| WO 03103399 | A1 | 18-12-2003 | AU | 2003241258 A1 | 22-12-2003 |
| | | | EP | 1551229 A1 | 13-07-2005 |
| | | | US | 2006147592 A1 | 06-07-2006 |
| | | | WO | 03103399 A1 | 18-12-2003 |

EPO FORM P0460

Pour tout renseignement concernant cette annexe : voir Journal Officiel de l'Office européen des brevets, No.12/82